# EUROPEAN PATENT APPLICATION

(11) **EP 4 763 586 A1**
(43) Date of publication of application: **24.06.2026**
(21) Application number: 24857793.4
(22) Date of filing: 16.04.2024
(51) Int. Cl.: B60L 53/00, B60L 53/60

(54) **VEHICLE CHARGING SWITCHING SYSTEM AND METHOD, STORAGE MEDIUM, AND CHARGING CONTROLLER**

(30) Priority: 25.08.2023 CN 202311085800
(71) Applicant: Contemporary Amperex Intelligence Technology (Shanghai) Limited, Shanghai 201306 (CN); Contemporary Amperex Technology Co., Limited, Ningde, Fujian 352100 (CN)
(72) Inventor: FENG, Yang, Shanghai 201306 (CN); ZHANG, Chuanhui, Shanghai 201306 (CN)
(74) Representative: Gong, Jinping
(86) International application number: PCT/CN2024/088067
(87) International publication number: WO 2025/044243

(57) **Abstract**

A vehicle charging switching method is provided. When a first charging circuit (10) is used to perform direct current charging on a power battery (B), before switching to a second charging circuit (20) to perform boost charging on the power battery (B), a charging controller (30) controls the first charging circuit (10) to pre-charge a pre-charging unit (21) in the second charging circuit (20), and upon detecting that a voltage of the pre-charging unit (21) matches a voltage of the power battery (B), controls the second charging circuit (20) to perform boost charging on the power battery (B). Thus, to perform boost charging on the power battery (B), there is no need to exit the charging process to reinsert a charging connector and swipe a card, achieving seamless and uninterrupted switching from direct charging of the power battery (B) to boost charging of the power battery (B), improving the efficiency of charging the power battery (B) and satisfying user requirements for a single charging process. A vehicle charging switching system (100), a computer-readable storage medium, a charging controller (30), and a vehicle are further disclosed.

## Description

### TECHNICAL FIELD

This application relates to the technical field of vehicles, and in particular, to a vehicle charging switching system and method, a storage medium, and a charging controller.

### BACKGROUND

A vehicle may include a charging circuit and a power battery, and the charging circuit is suitable for direct current charging and boost charging on the power battery, to supplement electrical energy to the power battery and enable the battery to supply power to other devices in the vehicle.

In the related art, after the charging circuit performs direct current charging on the power battery, it is necessary to reinsert a charging connector and swipe the card, and then the charging circuit performs boost charging on the power battery.

However, since it is necessary to reinsert the charging connector and swipe the card during the charging process, user requirements for a single charging process cannot be satisfied.

### SUMMARY

In view of the above problems, this application provides a vehicle charging switching system and method, a storage medium, and a charging controller. In this method, when a first charging circuit is used to perform direct current charging on a power battery, before switching to a second charging circuit to perform boost charging on the power battery, a charging controller controls the first charging circuit to pre-charge a pre-charging unit in the second charging circuit, and upon detecting that a voltage of the pre-charging unit matches a voltage of the power battery, controls the second charging circuit to perform boost charging on the power battery. Thus, to perform boost charging on the power battery, there is no need to exit the charging process to reinsert a charging connector and swipe a card, achieving seamless and uninterrupted switching from direct current charging of the power battery to boost charging of the power battery, improving the efficiency of charging the power battery. Moreover, this implementation can satisfy user requirements for a single charging process.

In one aspect, a vehicle charging switching method is provided. The vehicle includes a power battery, a first charging circuit, and a second charging circuit; the first charging circuit is suitable for direct current charging on the power battery; the second charging circuit is suitable for boost charging on the power battery; and the method includes:
when the first charging circuit is used to perform direct current charging on the power battery, if determining that it is necessary to switch to the second charging circuit to perform boost charging on the power battery, controlling the first charging circuit to pre-charge a pre-charging unit in the second charging circuit; and
upon detecting that a voltage of the pre-charging unit matches a voltage of the power battery, controlling the second charging circuit to perform boost charging on the power battery.

To perform boost charging on the power battery, there is no need to exit the charging process to reinsert a charging connector and swipe a card, achieving seamless and uninterrupted switching from direct current charging of the power battery to boost charging of the power battery, improving the efficiency of charging the power battery. Moreover, this implementation can satisfy user requirements for a single charging process.

Optionally, the first charging circuit includes a first switch, the first switch is suitable for connecting a charging device to the power battery; and using the first charging circuit to perform direct current charging on the power battery includes:
controlling the first switch to close, and controlling the charging device to perform constant current charging on the power battery.

Optionally, when the charging device performs constant current charging on the power battery, the method further includes:
if the voltage of the power battery reaches a first target charging voltage, controlling the charging device to perform constant voltage charging on the power battery.

Optionally, the determining that it is necessary to switch to the second charging circuit to perform boost charging on the power battery includes:
when the charging device performs constant voltage charging on the power battery, acquiring an output current of the charging device; and
when the output current of the charging device is less than or equal to a first preset current threshold, determining that it is necessary to switch to the second charging circuit to perform boost charging on the power battery.

Optionally, the pre-charging unit includes a pre-charging capacitor and a pre-charging switch, one end of the pre-charging capacitor is connected to a negative electrode terminal, another end of the pre-charging capacitor is connected to one end of the pre-charging switch, another end of the pre-charging switch is suitable for connecting to the first charging circuit, and the controlling the first charging circuit to pre-charge a pre-charging unit in the second charging circuit includes:
controlling the pre-charging switch to close, so that the first charging circuit charges the pre-charging capacitor.

Optionally, the second charging circuit further includes a second switch and a boost apparatus, the second switch is suitable for connecting the charging device to the pre-charging capacitor, the boost apparatus is connected between the pre-charging switch and the power battery, and the controlling the second charging circuit to perform boost charging on the power battery includes:
controlling the pre-charging switch to remain closed and controlling the second switch to close, and when cutting off a charging connection between the first charging circuit and the power battery, controlling the boost apparatus to perform boost transformation on direct current output by the charging device, so as to charge the power battery.

Optionally, the controlling the pre-charging switch to remain closed and controlling the second switch to close includes:
when controlling the pre-charging switch to remain closed, controlling the second switch to close; and
after controlling the second switch to close, cutting off the charging connection between the first charging circuit and the power battery.

Optionally, the boost apparatus is formed by an inverter bridge and a motor winding in the vehicle.

Optionally, the inverter bridge includes three-phase bridge arms, a direct current end of the three-phase bridge arms is connected to the power battery, an alternating current end of the three-phase bridge arms is connected to the motor winding and has three nodes, and another end of the pre-charging switch is suitable for connecting to any one of the three nodes.

In another aspect, a computer-readable storage medium is provided, storing a vehicle charging switching program, and when the vehicle charging switching program is executed by a processor, the vehicle charging switching method described in the above aspect is implemented.

In still another aspect, a charging controller is provided, including: a memory, a processor, and a vehicle charging switching program stored on the memory and runnable on the processor, and when the processor executes the vehicle charging switching program, the vehicle charging switching method described in the above aspect is implemented.

In yet another aspect, a vehicle charging switching system is provided, including:
a first charging circuit and a second charging circuit, where the first charging circuit is suitable for direct current charging on a power battery in a vehicle, and the second charging circuit is suitable for boost charging on the power battery; and
a charging controller, configured to: when the first charging circuit is used to perform direct current charging on the power battery, before switching to the second charging circuit to perform boost charging on the power battery, control the first charging circuit to pre-charge a pre-charging unit in the second charging circuit; and upon detecting that a voltage of the pre-charging unit matches a voltage of the power battery, control the second charging circuit to perform boost charging on the power battery.

In still yet another aspect, a vehicle is provided, including a power battery and the vehicle charging switching system described in the above aspect.

The above description is only an overview of the technical solutions of this application. In order to more clearly understand the technical means of this application, it can be implemented in accordance with the contents of the specification, and in order to make the above and other objects, features, and advantages of this application more obvious and understandable, specific embodiments of this application are exemplified below.

### BRIEF DESCRIPTION OF DRAWINGS

FIG. 1 is a schematic structural diagram of a vehicle provided by an embodiment of this application;
FIG. 2 is another schematic structural diagram of a vehicle provided by an embodiment of this application;
FIG. 3 is still another schematic structural diagram of a vehicle provided by an embodiment of this application;
FIG. 4 is a timing diagram of controlling a first switch, a second switch, and a pre-charging switch provided by an embodiment of this application;
FIG. 5 is yet another schematic structural diagram of a vehicle provided by an embodiment of this application;
FIG. 6 is still yet another schematic structural diagram of a vehicle provided by an embodiment of this application;
FIG. 7 is a further schematic structural diagram of a vehicle provided by an embodiment of this application;
FIG. 8 is a flowchart of a vehicle charging switching method provided by an embodiment of this application;
FIG. 9 is a flowchart of another vehicle charging switching method provided by an embodiment of this application; and
FIG. 10 is a schematic structural diagram of a charging controller provided by an embodiment of this application.

### DETAILED DESCRIPTION OF EMBODIMENTS

The embodiments for the technical solutions of this application will be described in detail below with reference to the accompanying drawings. The following embodiments are only used to more clearly illustrate the technical solution of this application, and therefore are only examples, and cannot be used to limit the protection scope of this application.

Unless otherwise defined, all technical and scientific terms used herein have the same meaning as commonly understood by those skilled in the technical field to which this application pertains; the terms used herein are only for the purpose of describing specific embodiments and are not intended to limit this application; the terms "include" and "have" and any variations thereof in the specification and claims of this application and in the above description of drawings are intended to cover non-exclusive inclusion.

In the description of the embodiments of this application, the technical terms "first", "second", and the like are only used to distinguish different objects, and cannot be understood as indication or implication of relative importance or implicit indication of the number, specific order, or primary-secondary relationship of the indicated technical features. In the description of the embodiments of this application, "a plurality" means two or more, unless otherwise explicitly and specifically defined.

Reference herein to "an embodiment" means that a particular feature, structure, or characteristic described with reference to the embodiment may be included in at least one embodiment of this application. The appearance of this phrase in various places in the specification does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of this application, the term "and/or" is merely a description of an association relationship of associated objects, indicating that three relationships may exist, for example, A and/or B may indicate: A exists alone, A and B exist simultaneously, and B exists alone. In addition, the character "/" herein generally indicates that the associated objects before and after are in an "or" relationship.

In the description of the embodiments of this application, the term "a plurality of" refers to two or more (including two), and similarly, "a plurality of groups" refers to two or more groups (including two groups), and "a plurality of pieces" refers to two or more pieces (including two pieces).

In the description of the embodiments of this application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the drawings, and are only for the convenience of describing the embodiments of this application and simplifying the description, rather than indicating or implying that the referred apparatus or element must have a specific orientation, be constructed and operated in a specific orientation, and therefore cannot be understood as limitations to the embodiments of this application.

In the description of the embodiments of this application, unless otherwise explicitly specified and limited, the technical terms "mounting", "joining", "connection", "fastening", and the like should be understood in a broad sense, for example, it may be a fixed connection, a detachable connection, or integrated formation; it may also be a mechanical connection or an electrical connection; it may be a direct connection or an indirect connection through an intermediate medium; it may be internal communication of two elements or an interaction relationship of two elements. For those of ordinary skill in the art, the specific meanings of the above terms in the embodiments of this application can be understood according to specific situations.

A vehicle may include a charging circuit and a power battery, and the charging circuit is configured to perform direct current charging and boost charging on the power battery, to supplement electrical energy to the power battery and enable the battery to supply power to other devices in the vehicle.

In the related art, after the charging circuit performs direct current charging on the power battery, it is necessary to reinsert a charging connector and swipe a card, and then the charging circuit performs boost charging on the power battery.

However, after the charging circuit performs direct current charging on the power battery, it is necessary to reinsert the charging connector and swipe the card before the charging circuit performs boost charging on the power battery, resulting in low efficiency of charging the power battery. Moreover, for a single charging process, it is necessary to reinsert the charging connector and swipe the card during the charging process, thus failing to satisfy the user requirements.

An embodiment of this application provides a vehicle charging switching system. A first charging circuit in the vehicle charging switching system is suitable for direct current charging on a power battery, and a second charging circuit is suitable for boost charging on the power battery. A charging controller is configured to: when the first charging circuit is used to perform direct current charging on the power battery, before switching to the second charging circuit to perform boost charging on the power battery, control the first charging circuit to pre-charge a pre-charging unit in the second charging circuit; and upon detecting that a voltage of the pre-charging unit matches a voltage of the power battery, control the second charging circuit to perform boost charging on the power battery.

Since boost charging can be performed on the power battery through controlling the second charging circuit, reinserting the charging connector and swiping the card are not required in this process, thereby improving the efficiency of charging the power battery and satisfying user requirements in a single charging process.

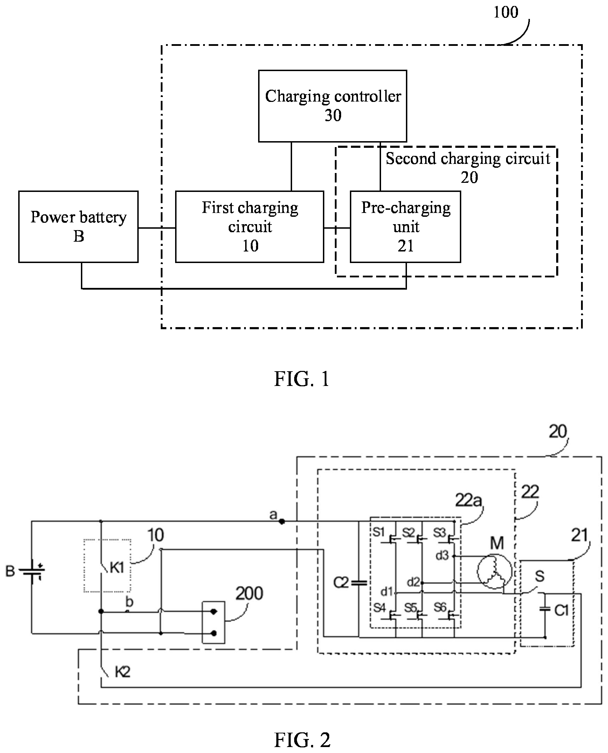

An embodiment of this application provides a vehicle. As shown in FIG. 1, the vehicle includes a vehicle charging switching system 100 and a power battery B, and the vehicle charging switching system 100 includes: a first charging circuit 10, a second charging circuit 20, and a charging controller 30.

The first charging circuit 10 and the second charging circuit 20 are both connected to the power battery B. The first charging circuit 10 is suitable for direct current charging on the power battery B, and the second charging circuit 20 is suitable for boost charging on the power battery B.

The charging controller 30 is connected to the first charging circuit 10 and the second charging circuit 20. The charging controller 30 is configured to: when the first charging circuit 10 is used to perform direct current charging on the power battery B, before switching to the second charging circuit 20 to perform boost charging on the power battery B, control the first charging circuit 10 to pre-charge a pre-charging unit 21 in the second charging circuit 20; and upon detecting that a voltage of the pre-charging unit 21 matches a voltage of the power battery B, control the second charging circuit 20 to perform boost charging on the power battery B.

The voltage of the pre-charging unit 21 matching the voltage of the power battery B may mean that the voltage of the pre-charging unit 21 is equal to the voltage of the power battery B, or an absolute value of a difference between the voltage of the pre-charging unit 21 and the voltage of the power battery B is less than a voltage threshold; and when the voltage threshold is greater than 0, the voltage of the pre-charging unit 21 is close to the voltage of the power battery B.

In summary, an embodiment of this application provides a vehicle charging switching system. In the system, when a first charging circuit is used to perform direct current charging on a power battery, before switching to the second charging circuit to perform boost charging on the power battery, a charging controller controls the first charging circuit to pre-charge a pre-charging unit in a second charging circuit; and upon detecting that a voltage of the pre-charging unit matches a voltage of the power battery, controls the second charging circuit to perform boost charging on the power battery.

Thus, to perform boost charging on the power battery, there is no need to exit the charging process to reinsert the charging connector and swipe the card, achieving seamless and uninterrupted switching from direct current charging of the power battery to boost charging of the power battery, improving the efficiency of charging the power battery. Moreover, this implementation can satisfy user requirements for a single charging process.

Refer to FIG. 1 and FIG. 2. The first charging circuit 10 may include a first switch K1, where the first switch K1 is suitable for connecting a charging device 200 to the power battery B. The charging device 200 may be a direct current (direct current, DC) charging station.

Refer to FIG. 2. One end of the first switch K1 is connected to the charging device 200, and another end of the first switch K1 is connected to a positive electrode terminal (+) of the power battery B.

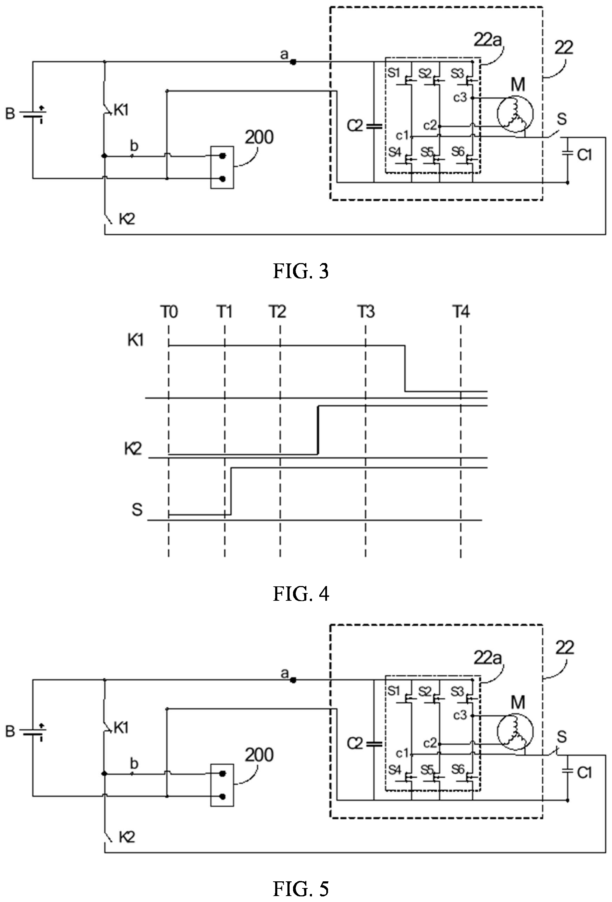

Refer to FIG. 3 and FIG. 4. At time T0, the charging controller 30 is configured to control the first switch K1 to close and control the charging device 200 to perform constant current charging on the power battery B.

While controlling the first switch K1 to close, the charging controller 30 may send a constant current charging request to the charging device 200, and then the charging device 200 may, in response to the constant current charging request, perform constant current charging on the power battery B, thereby achieving constant direct current charging on the power battery B via the first charging circuit 10.

It is assumed that a rated voltage of the charging device 200 is 750 volts (V); at time T0, the charging controller 30 controls the first switch K1 to close, an output voltage of the charging device 200 and a voltage Ub1 of the power battery B are both 750 V, a voltage of a first node a is equal to a voltage Ub1 of the power battery B, and the first node a is connected between the power battery B and the second charging circuit 20. An output current of the charging device 200 and a current of a bus are both 99 amperes (A), and the bus is a bus connected to the power battery B.

After the voltage Ub1 of the power battery B reaches 750 V, the output current of the charging device 200 continues to decrease. Between time T0 and time T1, the voltage Ub1 of the power battery B is less than 750 V, the output voltage of the charging device 200 is close to the voltage Ub1 of the power battery B, and the voltage of the first node a is equal to the voltage Ub1 of the power battery B. Upon detecting that the output current is less than or equal to a switching threshold, the charging controller 30 may send a current reduction request to the charging device 200, and the charging device 200 may, in response to the current reduction request, reduce the output current so that the output current is less than or equal to a first reference current, where the first reference current is close to 1 A, and in this case, the current of the bus is close to 0 A. For example, the switching threshold may be 100 A.

When the charging device 200 performs constant current charging on the power battery B, the charging controller 30 may check whether the voltage of the power battery B reaches a first target charging voltage. If the voltage of the power battery B does not reach the first target charging voltage, the charging device 200 may be controlled to continue the constant current charging on the power battery B. If the voltage of the power battery B reaches the first target charging voltage, the charging device 200 may be controlled to perform constant voltage charging on the power battery B. The first target charging voltage is pre-stored in the charging controller 30.

If the voltage of the power battery B reaches the first target charging voltage, the charging controller 30 may send a constant voltage charging request to the charging device 200, and then the charging device 200 may, in response to the constant voltage charging request, perform constant voltage charging on the power battery B.

A time at which the charging device 200 starts constant voltage charging on the power battery B is time T1. At time T1, the voltage Ub1 of the power battery B is less than 750 V, the output voltage of the charging device 200 is close to the voltage Ub1 of the power battery B, and the voltage of the first node a is equal to the voltage Ub1 of the power battery B. The output current of the charging device and the bus current are close to 0 A.

When the charging device 200 performs constant voltage charging on the power battery B, the charging controller 30 may acquire the output current of the charging device 200, and when the output current of the charging device 200 is less than or equal to a first preset current threshold, determine to switch to the second charging circuit 20 to perform boost charging on the power battery B. The first preset current threshold is pre-stored in the charging device 200.

It can be understood that during the process in which the charging device 200 performs constant voltage charging on the power battery B, the output current of the charging device 200 still continues to decrease. When determining that the output current of the charging device 200 is less than or equal to the first preset current threshold, the charging controller 30 can determine that a charging power of the charging device 200 is small, and therefore determine to switch to the second charging circuit 20 to perform boost charging on the power battery B.

Refer to FIG. 2. The pre-charging unit 21 may include a pre-charging capacitor C1 and a pre-charging switch S. One end of the pre-charging capacitor C1 is connected to a negative electrode terminal (-), another end of the pre-charging capacitor C1 is connected to one end of the pre-charging switch S, and another end of the pre-charging switch S is suitable for connecting to the first charging circuit 10.

Refer to FIG. 5. If determining to switch to the second charging circuit 20 to perform boost charging on the power battery B, the charging controller 30 may control the pre-charging switch S to close, so that the first charging circuit 10 charges the pre-charging capacitor C1, thereby achieving control of the first charging circuit 10 to pre-charge the pre-charging unit 21.

Refer to FIG. 2 and FIG. 4. A time at which the charging controller 30 controls the pre-charging switch S to close is between time T1 and time T2. At time T2, the voltage Ub1 of the power battery B is less than 750 V; the output voltage of the charging device 200, the voltage of the pre-charging capacitor C1, and the voltage of the first node a are all equal to the voltage Ub1 of the power battery B; and the output current of the charging device 200 and the current of the bus are both close to 0 A.

Refer to FIG. 2. The second charging circuit 20 may further include a second switch K2 and a boost apparatus 22, the second switch K2 is suitable for connecting the charging device 200 to the pre-charging capacitor C1, and the boost apparatus 22 is connected between the pre-charging switch S and the power battery B.

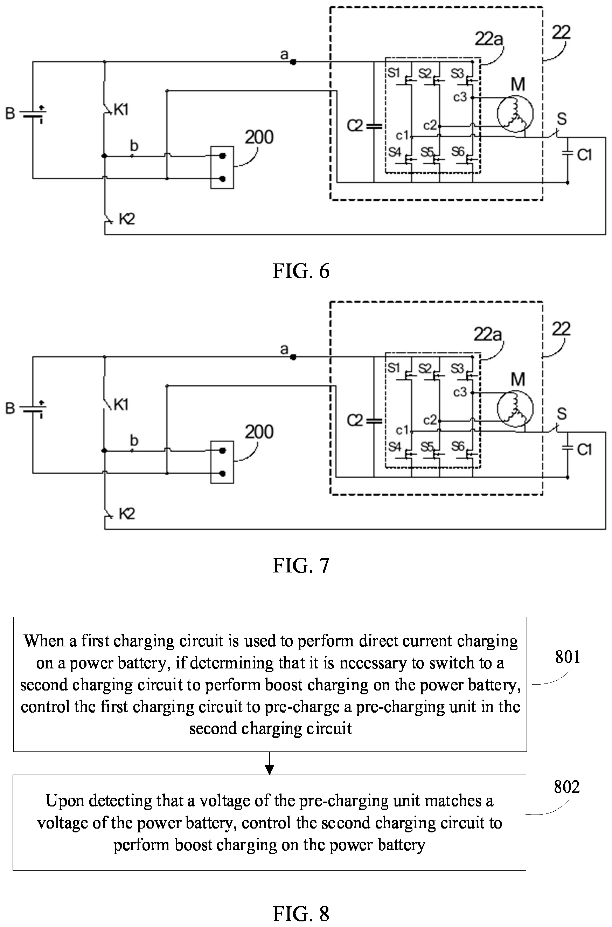

Refer to FIG. 6. After controlling the pre-charging switch S to close, upon detecting that the voltage of the pre-charging capacitor C1 matches the voltage of the power battery B, the charging controller 30 may control the pre-charging switch S to remain closed and control the second switch K2 to close; and when cutting off a charging connection between the first charging circuit 10 (the first charging circuit 10 includes the first switch K1) and the power battery B, the charging controller 30 may control the boost apparatus 22 to perform boost transformation on direct current output by the charging device 200, to charge the power battery B, thereby achieving control over the second charging circuit 20 for boost charging on the power battery B.

The charging controller 30 may, when controlling the pre-charging switch S to remain closed, control the second switch K2 to close; and after controlling the second switch K2 to close, cut off the charging connection between the first charging circuit 10 and the power battery B.

Refer to FIG. 7. When detecting that the output current is less than a second reference current, the charging controller 30 may control the first switch K1 to open, thereby cutting off the charging connection between the first charging circuit 10 and the power battery B. The second reference current may be 5 A.

Refer to FIG. 4. A time at which the charging controller 30 controls the second switch K2 to close is between time T2 and time T3, and a time at which the first switch K1 is controlled to open is between time T3 and time T4.

Between time T2 and time T3, the voltage Ub1 of the power battery B is less than 750 V; the output voltage of the charging device 200, the voltage of the first node a, and the voltage of the pre-charging capacitor C1 are all equal to the voltage Ub1 of the power battery B; and the output current of the charging device 200 and the current of the bus are both close to 0 A.

After the first switch K1 is controlled to open, at time T4, the voltage Ub1 of the power battery B is greater than 750 V; the output voltage of the charging device 200, the voltage of the pre-charging capacitor C1, and the voltage of a second node b are all equal to 740 V; the voltage of the first node a is equal to the voltage Ub1 of the power battery; and the output current of the charging device 200 and the current of the bus are both greater than 100 A.

Refer to FIG. 2. The boost apparatus 22 may be formed by an inverter bridge 22a and a motor winding M in the vehicle. The inverter bridge 22a may include three-phase bridge arms. A direct current end of the three-phase bridge arms is connected to the power battery B, an alternating current end of the three-phase bridge arms is connected to the motor winding M and has three nodes, and another end of the pre-charging switch S is suitable for connecting to any one of the three nodes.

Refer to FIG. 2. The three nodes may include node c1, node c2, and node c3. A first bridge arm of the three-phase bridge arms includes a first switching tube S1 and a fourth switching tube S4 connected in series, a second bridge arm includes a second switching tube S2 and a fifth switching tube S5 connected in series, and a third bridge arm includes a third switching tube S3 and a sixth switching tube S6 connected in series. The node 1 is located on the first bridge arm, the node 2 is located on the second bridge arm, the node 3 is located on the third bridge arm, and the another end of the pre-charging switch S is suitable for connecting to node c1.

Refer to FIG. 2. The boost apparatus 22 may further include a first capacitor C2, and the first capacitor C2 is connected in parallel with the inverter bridge 22a.

In summary, an embodiment of this application provides a vehicle charging switching system. In the system, when the first charging circuit is used to perform direct current charging on the power battery, before switching to the second charging circuit to perform boost charging on the power battery, the charging controller controls the first charging circuit to pre-charge the pre-charging unit in the second charging circuit; and upon detecting that the voltage of the pre-charging unit matches the voltage of the power battery, controls the second charging circuit to perform boost charging on the power battery.

Thus, to perform boost charging on the power battery, there is no need to exit the charging process to reinsert the charging connector and swipe the card, achieving seamless and uninterrupted switching from direct current charging of the power battery to boost charging of the power battery, improving the efficiency of charging the power battery. Moreover, this implementation can satisfy user requirements for a single charging process.

When the rated voltage of the power battery is greater than the rated voltage of the charging device, the vehicle charging switching system is used to automatically switch direct current charging of the power battery to boost charging of the power battery, thereby achieving fast charging with high power to complete full charging.

FIG. 8 is a flowchart of a vehicle charging switching method provided by an embodiment of this application, applied to the charging controller 30 shown in FIG. 1. As shown in FIG. 8, the method includes the following steps.

Step 801: When a first charging circuit is used to perform direct current charging on a power battery, if determining that it is necessary to switch to a second charging circuit to perform boost charging on the power battery, control the first charging circuit to pre-charge a pre-charging unit in the second charging circuit.

Step 802: Upon detecting that a voltage of the pre-charging unit matches a voltage of the power battery, control the second charging circuit to perform boost charging on the power battery.

In summary, an embodiment of this application provides a vehicle charging switching method. In the method, when the first charging circuit is used to perform direct current charging on the power battery, if determining that it is necessary to switch to the second charging circuit to perform boost charging on the power battery, the charging controller may control the first charging circuit to pre-charge the pre-charging unit in the second charging circuit; and upon detecting that the voltage of the pre-charging unit matches the voltage of the power battery, control the second charging circuit to perform boost charging on the power battery.

Thus, to perform boost charging on the power battery, there is no need to exit the charging process to reinsert the charging connector and swipe the card, achieving seamless and uninterrupted switching from direct current charging of the power battery to boost charging of the power battery, improving the efficiency of charging the power battery. Moreover, this implementation can satisfy user requirements for a single charging process.

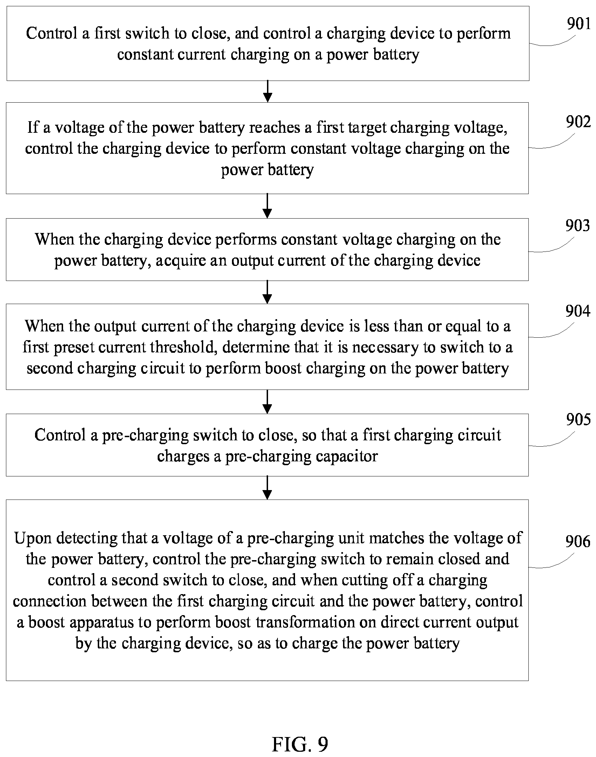

FIG. 9 is a flowchart of another vehicle charging switching method provided by an embodiment of this application, applied to the charging controller 30 shown in FIG. 1. As shown in FIG. 9, the method may include the following steps.

Step 901: Control a first switch to close, and control a charging device to perform constant current charging on a power battery.

Step 902: If a voltage of the power battery reaches a first target charging voltage, control the charging device to perform constant voltage charging on the power battery.

Step 903: When the charging device performs constant voltage charging on the power battery, acquire an output current of the charging device.

Step 904: When the output current of the charging device is less than or equal to a first preset current threshold, determine that it is necessary to switch to a second charging circuit to perform boost charging on the power battery.

Step 905: Control a pre-charging switch to close, so that a first charging circuit charges a pre-charging capacitor.

Step 906: Upon detecting that a voltage of a pre-charging unit matches the voltage of the power battery, control the pre-charging switch to remain closed and control a second switch to close, and when cutting off a charging connection between the first charging circuit and the power battery, control a boost apparatus to perform boost transformation on direct current output by the charging device, so as to charge the power battery.

It should be noted that for the specific implementation processes of steps 801 and 802 and steps 901 to 906, reference may be made to the above system embodiment, which are not repeated in the embodiment of this application.

In summary, an embodiment of this application provides a vehicle charging switching method. In the method, when a first charging circuit is used to perform direct current charging on a power battery, if determining that it is necessary to switch to a second charging circuit to perform boost charging on the power battery, a charging controller may control the first charging circuit to pre-charge a pre-charging unit in a second charging circuit; and upon detecting that a voltage of the pre-charging unit matches a voltage of the power battery, control the second charging circuit to perform boost charging on the power battery.

Thus, to perform boost charging on the power battery, there is no need to exit the charging process to reinsert the charging connector and swipe the card, achieving seamless and uninterrupted switching from direct current charging of the power battery to boost charging of the power battery, improving the efficiency of charging the power battery. Moreover, this implementation can satisfy user requirements for a single charging process.

An embodiment of this application provides a computer-readable storage medium, storing a vehicle charging switching program. When the vehicle charging switching program is executed by a processor, the vehicle charging switching method described in the above embodiment is implemented, for example, the vehicle charging switching method shown in FIG. 8 or FIG. 9.

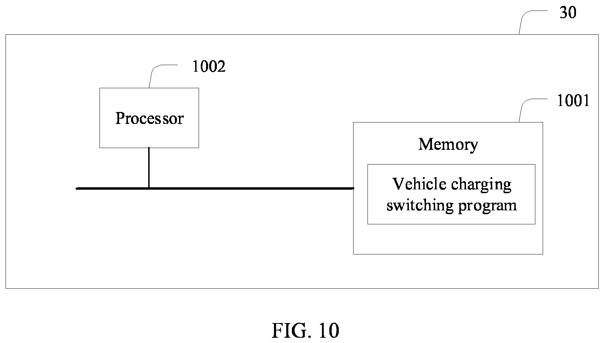

FIG. 10 is a schematic structural diagram of a charging controller provided by an embodiment of this application, including: a memory 1001, a processor 1002, and a vehicle charging switching program stored on the memory 1001 and runnable on the processor 1002. When the processor 1002 executes the vehicle charging switching program, the vehicle charging switching method described in the above embodiment is implemented, for example, the vehicle charging switching method shown in FIG. 8 or FIG. 9.

Finally, it should be noted that the above embodiments are only used to illustrate the technical solutions of this application, rather than limiting them; although this application has been described in detail with reference to the foregoing embodiments, those of ordinary skill in the art should understand that modifications can still be made to the technical solutions recorded in the foregoing embodiments, or equivalent replacements can be made to some or all of the technical features therein; and these modifications or replacements do not make the essence of the corresponding technical solutions depart from the scope of the technical solutions of the embodiments of this application, and should all be covered within the scope of the claims and specification of this application. In particular, as long as there is no structural conflict, the technical features mentioned in the various embodiments can be combined in any manner. This application is not limited to the specific embodiments disclosed herein, but includes all technical solutions falling within the scope of the claims.

## Claims

1. A vehicle charging switching method, wherein the vehicle comprises a power battery, a first charging circuit, and a second charging circuit; the first charging circuit is suitable for direct current charging on the power battery; the second charging circuit is suitable for boost charging on the power battery; and the method comprises:
when the first charging circuit is used to perform direct current charging on the power battery, if determining that it is necessary to switch to the second charging circuit to perform boost charging on the power battery, controlling the first charging circuit to pre-charge a pre-charging unit in the second charging circuit; and
upon detecting that a voltage of the pre-charging unit matches a voltage of the power battery, controlling the second charging circuit to perform boost charging on the power battery.

2. The vehicle charging switching method according to claim 1, wherein the first charging circuit comprises a first switch, and the first switch is suitable for connecting a charging device to the power battery; and using the first charging circuit to perform direct current charging on the power battery comprises:
controlling the first switch to close, and controlling the charging device to perform constant current charging on the power battery.

3. The vehicle charging switching method according to claim 2, wherein when the charging device performs constant current charging on the power battery, the method further comprises:
if the voltage of the power battery reaches a first target charging voltage, controlling the charging device to perform constant voltage charging on the power battery.

4. The vehicle charging switching method according to claim 3, wherein the determining that it is necessary to switch to the second charging circuit to perform boost charging on the power battery comprises:
when the charging device performs constant voltage charging on the power battery, acquiring an output current of the charging device; and
when the output current of the charging device is less than or equal to a first preset current threshold, determining that it is necessary to switch to the second charging circuit to perform boost charging on the power battery.

5. The vehicle charging switching method according to any one of claims 1 to 4, wherein the pre-charging unit comprises a pre-charging capacitor and a pre-charging switch, one end of the pre-charging capacitor is connected to a negative electrode terminal, another end of the pre-charging capacitor is connected to one end of the pre-charging switch, another end of the pre-charging switch is suitable for connecting to the first charging circuit, and the controlling the first charging circuit to pre-charge a pre-charging unit in the second charging circuit comprises:
controlling the pre-charging switch to close, so that the first charging circuit charges the pre-charging capacitor.

6. The vehicle charging switching method according to claim 5, wherein the second charging circuit further comprises a second switch and a boost apparatus, the second switch is suitable for connecting the charging device to the pre-charging capacitor, the boost apparatus is connected between the pre-charging switch and the power battery, and the controlling the second charging circuit to perform boost charging on the power battery comprises:
controlling the pre-charging switch to remain closed and controlling the second switch to close, and when cutting off a charging connection between the first charging circuit and the power battery, controlling the boost apparatus to perform boost transformation on direct current output by the charging device, so as to charge the power battery.

7. The vehicle charging switching method according to claim 6, wherein the controlling the pre-charging switch to remain closed and controlling the second switch to close comprises:
when controlling the pre-charging switch to remain closed, controlling the second switch to close; and
after controlling the second switch to close, cutting off the charging connection between the first charging circuit and the power battery.

8. The vehicle charging switching method according to claim 6 or 7, wherein the boost apparatus is formed by an inverter bridge and a motor winding in the vehicle.

9. The vehicle charging switching method according to claim 8, wherein the inverter bridge comprises three-phase bridge arms, a direct current end of the three-phase bridge arms is connected to the power battery, an alternating current end of the three-phase bridge arms is connected to the motor winding and has three nodes, and another end of the pre-charging switch is suitable for connecting to any one of the three nodes.

10. A computer-readable storage medium, storing a vehicle charging switching program, and when the vehicle charging switching program is executed by a processor, the vehicle charging switching method according to any one of claims 1 to 9 is implemented.

11. A charging controller, comprising: a memory, a processor, and a vehicle charging switching program stored on the memory and runnable on the processor, and when the processor executes the vehicle charging switching program, the vehicle charging switching method according to any one of claims 1 to 9 is implemented.

12. A vehicle charging switching system, comprising:
a first charging circuit and a second charging circuit, wherein the first charging circuit is suitable for direct current charging on a power battery in a vehicle, and the second charging circuit is suitable for boost charging on the power battery; and
a charging controller, configured to: when the first charging circuit is used to perform direct current charging on the power battery, before switching to the second charging circuit to perform boost charging on the power battery, control the first charging circuit to pre-charge a pre-charging unit in the second charging circuit; and upon detecting that a voltage of the pre-charging unit matches a voltage of the power battery, control the second charging circuit to perform boost charging on the power battery.

13. A vehicle, comprising a power battery and the vehicle charging switching system according to claim 12.
